# EUROPÄISCHE PATENTANMELDUNG

(11) **EP 3 431 459 A1**
(43) Veröffentlichungstag der Anmeldung: **23.01.2019**
(21) Anmeldenummer: 18174003.6
(22) Anmeldetag: 24.05.2018
(51) Int. Cl.: C04B 35/626, C04B 35/65, C04B 35/56, C04B 35/573, C04B 35/628, C04B 35/80

(54) **FASERVERBUNDWERKSTOFF UND VERFAHREN ZU DESSEN HERSTELLUNG**

(30) Priorität: 18.07.2017 DE 102017116141
(71) Anmelder: ArianeGroup GmbH, 82024 Taufkirchen (DE)
(72) Erfinder: Hofbauer, Peter Josef, 82024 Taufkirchen (DE)
(74) Vertreter: Schicker, Silvia

(57) **Zusammenfassung**

Ein Verfahren zum Herstellen eines Faserverbundwerkstoffs, umfassend: (i) Bereitstellen eines Granulats, das Polymer und Fasern umfasst, (ii) Herstellen eines Vorkörpers aus dem Granulat, (iii) Pyrolysieren des Vorkörpers zu einem porösen Vorkörper, und (iv) Infiltrieren des porösen Vorkörpers mit einem Matrix- oder Matrix-bildenden Material. Ein Faserverbundwerkstoff, umfassend eine Metall- oder Keramik-Matrix, mit von der Matrix eingebetteten Fasern, wobei die Fasern isotrop im Werkstoff verteilt sind.

## Beschreibung

Die Erfindung betrifft ein Verfahren zum Herstellen eines Faserverbundwerkstoffs. Ferner betrifft die Erfindung einen Faserverbundwerkstoff, der eine Metall-, oder Keramik-Matrix und im Werkstoff verteilte Fasern und optional Partikel umfasst, und wobei die Fasern isotrop verteilt sind.

Faserverbundwerkstoffe bestehen allgemein aus einer keramischen oder metallischen Matrix und verstärkenden Fasern, die in die Matrix eingebettet sind. Somit handelt es sich um einen Verbund aus Matrix und Faser, wobei die Fasern von der Matrix umschlossen sind. Durch gegenseitige Wechselwirkungen der beiden Komponenten erhalten Faserverbundwerkstoffe höherwertige Eigenschaften als jede der beiden einzeln beteiligten Komponenten. Faserverbundwerkstoffe können in keramische Faserverbundwerkstoffe (CMC, vom englischen "ceramic matrix composites") und metallische Faserverbundwerkstoffe bzw. Metallmatrix-Verbundwerkstoffe (MMC, vom englischen "metal matrix composite") unterteilt werden.

Keramische Faserverbundwerkstoffe haben eine keramische Matrix, in die Fasern eingebettet sind, d.h. wobei die Matrix durch Fasern verstärkt wird, wodurch eine faserverstärkte Keramik, Verbundkeramik bzw. Faserkeramik bereitgestellt wird. Metallische Faserverbundwerkstoffe haben eine metallische Matrix, in die Fasern eingebettet sind, wie z.B. verstärkte Aluminium-, Titan-, Magnesium- und Kupferwerkstoffe. Die Matrix liegt als elementares Metall, in Form einer Legierung, oder als entsprechendes Metallcarbid vor. Als metallische Faserverbundwerkstoffe werden demnach vorliegend auch Metallcarbid Faserverbundwerkstoffe verstanden. Als Fasern können Kohlenstoff- oder Siliziumcarbid-Fasern eingesetzt werden.

Üblicherweise werden Faserverbundwerkstoffe in der Form "Verstärkungsphase/Matrixphase" abgekürzt. So steht "C/C" zum Beispiel für Kohlenstofffaserverstärkter Kohlenstoff und "C/SiC" für Kohlenstofffaser-verstärktes Siliziumcarbid. Weitere Beispiele von Faserverbundwerkstoffen sind z.B. SiC/SiC und Al₂O_{3/}Al₂O₃.

In der Herstellung von faserverstärkten Verbundwerkstoffen werden üblicherweise zunächst Blöcke aus einem Polymer und Fasern bereitgestellt und diese mit Presswerkzeugen zu Rohblöcken gepresst. Der Pressvorgang führt in der Regel zu einer Ausrichtung der Fasern und somit zu einem anisotropen Werkstoff. Presslinge mit isotropen Eigenschaften können durch isostatisches Pressen erzeugt werden, was mit hohem Aufwand verbunden ist und nur mit einfachen Geometrien machbar ist. Die Rohblöcke werden anschließend pyrolysiert, wobei das Polymer zu Kohlenstoff und flüchtigen Gasen umgewandelt wird. Dadurch entsteht ein offenporiger faserverstärkter Werkstoff. Dieser muss in einem Formgebungsverfahren, z.B. durch Fräsen oder Sägen, in einen porösen Vorkörper mit der gewünschten Form geformt werden, wobei Material verloren geht. Anschließend kann der poröse Vorkörper mit einer flüssigen Phase, wie z.B. Silizium oder Metallen, infiltriert werden, um einen faserverstärkten Siliziumcarbid oder Metallcarbid Verbundwerkstoff bereitzustellen. Findet keine reaktive Infiltration statt oder wird die Matrix nicht vollständig zu einer neuen Phase umgesetzt, so können Infiltrat und Kohlenstoff als zusätzliche Phase im Verbundwerkstoff vorhanden sein.

Die Infiltration von Metallschmelzen in offenporöse Strukturen wird aufgrund geringer Kapillarität, Benetzung und Reaktivität meist nur unter hohen Drücken und hohen Temperaturen durchgeführt (sog. Druckinfiltration). So wird die Herstellung von z.B. faserverstärkten Metallen (MMC) in der Regel mit Druckinfiltrationsverfahren durchgeführt. Zur Herstellung von Kupfer-MMC werden üblicherweise Drücke von ca. 20 MPa und Temperaturen von ca. 850 °C in verschiedenen Pressverfahren angewendet. Bei allen beschriebenen Verfahren kann der aufgebrachte Druck während des Infiltrationsvorganges Auswirkungen auf den Vorkörper (die Preform) oder das Fasergerüst im Werkstoffgefüge haben.

Bauteile können in einem additiven, bzw. generativen Fertigungsverfahren gefertigt werden. In diesen auch als Rapid Prototyping bezeichneten Verfahren können Modelle, Muster, Prototypen, Werkzeuge und Endprodukte schnell und kostengünstig gefertigt werden. Diese Fertigung erfolgt aus formlosem (Flüssigkeiten, Gelen/Pasten, Pulver u. ä.) oder formneutralem (band-, drahtförmig, blattförmig) Material mittels chemischer und/oder physikalischer Prozesse. Der dreidimensionale Druck des Werkstoffs kann in Pulverbettverfahren, Freiraumverfahren, Flüssigmaterialverfahren und andere Schichtbauverfahren eingeteilt werden. Besonders hervorzuhebende Pulverbettverfahren sind selektives Laserschmelzen (SLM), selektives Lasersintern (SLS), Selective Heat Sintering (SHS), Binder Jetting und Elektronenstrahlschmelzen (Electron Beam Melting = EBM).

Moon et al. fertigte C-Vorkörper (C-Preforms) aus Glaskohlenstoffpulver, welche er mit Silizium reaktiv infiltrierte und so einen SiC/C-Werkstoff als keramischen Verbundwerkstoff erhielt [1]. Rambo et al. infiltrierte mit einer TiCu-Legierung eine additiv gefertigte C-Preform. Durch die reaktive, drucklose Infiltration entstand TiC/Ti-Cu als metallischer Faserverbundwerkstoff [2]. Shahzad et al. bettete Aluminiumoxidpartikel im Submikrometerbereich in Polyamid ein, indem er zunächst die Bestandteile in Lösung brachte und anschließend über Ausfällung das Granulat gewinnen konnte. Mittels SLS konnte es zu Preforms weiterverarbeitet werden, wobei sich das Polyamid verflüssigt und sich Hohlräume in der Preform bildeten. Diese führten dazu, dass nach dem Sinterprozess maximal 50% von der theoretischen Dichte erreicht werden konnte [3]. Weber et al. fertigte CFK-Preforms aus kurzfaserverstärkten Compounds welche im Spritzguss zu Preforms verarbeitet und anschließend über den LSI-Prozess keramisiert werden [4].

Die Erfindung ist auf die Aufgabe gerichtet, ein Verfahren zum Herstellen eines Faserverbundwerkstoffs bereitzustellen, das eine Porosität und isotrop verteilte Fasern aufweist, wobei durch das Verfahren Material eingespart werden kann. Ferner ist die Erfindung auf die Aufgabe gerichtet, einen Faserverbundwerkstoff bereitzustellen, der einfach hergestellt werden kann und der eine hohe Wärmeleitfähigkeit und Stabilität (Festigkeit und Steifigkeit) aufweist.

Diese Aufgabe wird durch ein Verfahren gemäß Anspruch 1 und einen Faserverbundwerkstoff gemäß Anspruch 12 gelöst.

Ein Verfahren zum Herstellen eines Faserverbundwerkstoffs umfasst:
(i) Bereitstellen eines Granulats, das Polymer und Fasern umfasst,
(ii) Herstellen eines Vorkörpers aus dem Granulat,
(iii) Pyrolysieren des Vorkörpers zu einem porösen Vorkörper, und
(iv) Infiltrieren des porösen Vorkörpers mit einem Matrix- oder Matrix-bildenden Material.

In Schritt (i) wird ein Granulat bereitgestellt, das Polymer und Fasern umfasst. Das Granulat kann beispielsweise hergestellt werden durch Vermengen/Mischen eines Polymers (z.B. einem noch nicht ausgehärteten Phenolharz) mit Fasern (z.B. Kohlenstoff- oder Siliziumcarbidfasern), anschließendes Aufheizen bis das Polymer flüssig bzw. viskos ist (z.B. auf 180-200°C), und Aufbringen auf eine Oberfläche mittels eines Sprüh-Verfahrens. Die Polymer-Faser-Mischung sammelt sich in Tropfenform auf der Oberfläche und kann nach dem Abkühlen als Granulat gewonnen werden. Durch Einstellen der Parameter (Druck, Temperatur, etc.) während dem SprühVerfahren kann u. A. der Granulat-Durchmesser eingestellt werden.

Die Fasern in einem solchen Granulat können isotrop (d.h. in alle Richtungen uniform bzw. homogen) verteilt vorliegen. Gegenüber einer anisotropen Verteilung, wie sie z.B. bei der Pressung von Rohblöcken entsteht, hat dies im Endprodukt den Vorteil, dass die Materialeigenschaften, wie insbesondere die Wärmeleitfähigkeit und die Stabilität, verbessert sind.

In Schritt (ii) wird ein Vorkörper (bzw. eine Preform) aus dem Granulat hergestellt. Der Vorkörper kann aufgrund des Einsatzes eines Granulats endformnah hergestellt werden. Bevorzugt wird hierbei ein additives Fertigungsverfahren eingesetzt. Der Vorkörper wird dabei schichtweise aus Granulat unter Einsatz eines physikalischen Schmelz- oder Sinterprozesses aufgebaut. Der schichtweise Aufbau des Vorkörpers kann beispielsweise in Schichtstärken von 100 bis 2000 µm erfolgen.

Da der Vorkörper endformnah gefertigt werden kann, ist der Rohstoffbedarf gering, was zur Ressourcenschonung und zur Verbesserung der CO2-Bilanz und Wirtschaftlichkeit des Verfahrens beitragen kann.

Die Fasern in dem Vorkörper können isotrop verteilt sein. Wie oben beschrieben kann ein Granulat eingesetzt werden, in welchem die Fasern bereits isotrop verteilt sind. Diese isotrope Verteilung führt sich dann im Vorkörper fort. Des Weiteren können bspw. mittels eines Lasers einzelne Bereiche des Granulats angesteuert und erhitzt werden, so dass auch hierdurch eine isotrope Verteilung der Fasern unterstützt werden kann.

In Schritt (iii) wird der so entstandene Vorkörper zu einem porösen Vorkörper (bzw. einem porösen Halbzeug) pyrolysiert. Während der Pyrolyse in Schritt (iii) entsteht durch Umsetzung der Polymer-Matrix in Kohlenstoff und in flüchtige Gase eine offenporige faserverstärkte Matrix als poröser Vorkörper. Bedingt durch die Pyrolyse der Polymer-Matrix zur Kohlenstoffmatrix können zudem auch Kohlenstoffpartikel vorliegen, die durch Carbidbildung z.B. im Falle mit der Infiltration von Silizium zu SiC-Partikeln in der Si-Phase umgesetzt werden. Dies führt zur sogenannten Hybridverstärkung, d.h. eine Kombination aus Partikel- und Faserverstärkung. Da Partikel- und Faserverstärkung unterschiedliche Verstärkungsmechanismen aufweisen, können sich diese gegenseitig ergänzen und somit eine weitere Festigkeitssteigerung erzielt werden

Die zuvor bereitgestellte isotrope Verteilung der Fasern kann in diesem Schritt in den porösen Vorkörper übertragen werden, so dass der poröse Vorkörper isotrop verteilte Fasern aufweist.

Die Schritte ii) und iii) können kombiniert werden, so dass ein schichtweiser Aufbau eines bereits pyrolysierten Vorkörpers ermöglicht wird. Dies wird im Folgenden als *in-situ* Pyrolyse bezeichnet.

In Schritt (iv) werden anschließend die porösen Vorkörper mit einem Matrix- oder Matrix-bildenden Material infiltriert. Matrix- oder Matrix-bildende Materialien sind bevorzugt solche, die eine benetzbare Zwischenschicht erzeugen und so eine Infiltration ermöglichen. Eine benetzbare Zwischenschicht kann z.B. notwendig sein, wenn der Benetzungswinkel des infiltrierenden Fluids mit dem Substrat größer als 90° ist, um den Benetzungswinkel entsprechend zu verkleinern.

Bevorzugt werden Carbid-bildende Materialien, die eine benetzbare Zwischenschicht aus dem Carbid-bildenden Material erzeugen und so eine spontane, reaktive Infiltration ermöglichen. Ebenfalls möglich ist die Verwendung von Additiven, welche eine benetzbare Zwischenschicht ermöglichen, wie z.B. Kaliumhexafluortitanat (K₂TiF₆).

Kaliumhexafluortitanat kann z.B. für die Erzeugung einer Zwischenschicht im Falle der Infiltration mit Aluminium verwendet werden. Da das Salz Kaliumhexafluortitanat vor Aluminium schmilzt, infiltriert die Salzschmelze den porösen Vorkörper zuerst und bildet dort eine benetzbare TiC-Schicht an den Kapillarwänden. Zudem verhindert das Salz eine Oxidierung der Al-Schmelze. Dies kann notwendig sein, da die Oxidschicht auf der Oberfläche der Al-Schmelze das Eindringen der Schmelze in den Vorkörper verhindern kann. Mit Kaliumhexafluortitanat als Schmelzmittel kann daher eine spontane Infiltration des Vorkörpers unterstützt werden.

Carbid-bildende Materialien sind z.B. Halbmetalle und Metalle. Das Halbmetall ist bevorzugt Silizium. Metalle sind bevorzugt ausgewählt aus Aluminium, Titan, Magnesium, Kupfer oder Legierungen dieser Metalle. Bevorzugt werden für die Infiltration Metallschmelzen oder anderen Fluide wie z.B. Silizium infiltriert, so dass CMC- (Verbundwerkstoff mit keramischer Matrix) oder MMC- (Verbundwerkstoff mit metallischer Matrix) Faserverbundwerkstoffe entstehen. Bevorzugte Infiltrationsmethoden sind Auflage-, Docht- und Tauchtränkung. Die Infiltration kann unter oxydischer Atmosphäre (wenn die Vorform vor Oxidation z.B. mit einer Salzschmelze geschützt wird), inerter Atmosphäre, oder unter Vakuum durchgeführt werden. Bevorzugt findet die Infiltration in inerter Atmosphäre, wie z.B. in einer Stickstoff- oder Argon-Atmosphäre oder unter Vakuum statt.

Die zuvor bereitgestellte isotrope Verteilung der Fasern kann in diesem Schritt in den Faserverbundwerkstoff übertragen werden, so dass der Faserverbundwerkstoff isotrop verteilte Fasern aufweist.

Somit können durch das Verfahren zum Herstellen eines Faserverbundwerkstoffs Faserverbundwerkstoffe hergestellt werden, in denen die Fasern isotrop in der Matrix verteilt sind.

Des Weiteren können, wie oben beschrieben, die Vorkörper aufgrund des Einsatzes des Granulats endformnah hergestellt werden, so dass keine überflüssigen Materialien eingesetzt werden. Dies führt zu einer Verringerung des Rohstoffbedarfs, zur Ressourcenschonung und somit zur Verbesserung der CO₂-Bilanz und Wirtschaftlichkeit des Verfahrens.

Bevorzugt umfasst in Schritt (i) das Polymer ein Duroplast. Duroplaste (bzw. Duromere) sind Polymere, die nach ihrer Aushärtung durch Erwärmung oder andere Maßnahmen nicht mehr verformt werden können. Sie können harte, amorphe, unlösliche Polymere enthalten. Die Polymere sind über kovalente Bindungen vernetzt, was eine geringe Erweichung beim Erhitzen verursacht. Die Vorprodukte (Prepolymere) sind Kunstharze, die noch schmelzbar bzw. löslich sind - und oft mit Füll- und Farbstoffen versetzt - gegossen oder warmgepresst werden können. Die Prepolymere sind tri- oder mehrfunktionelle Verbindungen, die mit Hilfe von Härtern und evtl. Katalysatoren oder durch hohe Temperaturen polymerisieren und zu einer engmaschigen Vernetzung führen.

Ein Beispiel eines solchen Duroplasten sind Phenoplaste, die auf Basis von Phenolharzen durch Aushärtung hergestellt werden. Neben Phenol können auch Verbindungen wie 3-Cresol, 3,5-Xylenol oder Resorcin verwendet werden. Durch katalysierte Polykondensation dieser Phenol-Derivate bilden sich ebenfalls Harze. Basische Kondensationsmittel bilden schmelzbare und in vielen Lösemitteln lösliche Harze, sogenannte Resole. Werden die Resole erhitzt, erhält man engmaschig vernetzte Polymere als unschmelzbare und unlösliche Endstufe. Diese Duroplaste zeichnen sich des Weiteren durch eine hohe Härte, Bruchfestigkeit und Flammwidrigkeit aus.

Die Duroplasten weisen gegenüber Thermoplasten den Vorteil auf, dass sie nicht bei höheren Temperaturen (z.B. während der additiven Fertigung oder der Pyrolyse) zerfließen. Mit Thermoplasten können daher keine porösen Strukturen durch Pyrolyse hergestellt werden. Außerdem lässt sich die Form des Materials mit Thermoplasten schwierig einstellen und führt zu großer Schwindung während der Pyrolyse.

In Schritt (ii) wird während der Herstellung des Vorkörpers der ungehärtete Duroplast im Granulat vernetzt. Während der anschließenden oder in-situ Pyrolyse wird dadurch gewährleistet, dass der Duroplast, gegenüber einem Thermoplasten, nicht zerfließt und somit die Form des Vorkörpers beibehalten wird.

Das Polymer ist des Weiteren bevorzugt so ausgewählt, dass es bei der Pyrolyse eine hohe Kohlenstoffausbeute liefert. Dies ist beispielsweise für Phenolharze der Fall, welche sich durch einen hohen Anteil Kohlenstoff zu Sauerstoff/Wasserstoff kennzeichnen. Durch eine hohe Kohlenstoffausbeute wird bei der reaktiven Infiltration z.B. mit Silizium ein entsprechend hoher SiC-Anteil sichergestellt und freies Silicizium als unerwünschte Nebenphase minimiert.

Als Fasern werden bevorzugt Kohlenstofffasern oder Siliziumcarbidfasern eingesetzt. Insbesondere bevorzugt sind Kohlenstofffasern. Kohlenstofffasern sind Fasern aus kohlenstoffhaltigen Ausgangsmaterialien, die durch an den Rohstoff angepasste chemische Reaktionen in graphitartig angeordneten Kohlenstoff umgewandelt werden. Man unterscheidet isotrope und anisotrope Typen: Isotrope Fasern besitzen nur geringe Festigkeiten und geringere technische Bedeutung, anisotrope Fasern zeigen hohe Festigkeiten und Steifigkeiten bei gleichzeitig geringer Bruchdehnung in axialer Richtung. Diese Isotropie ist nicht zu verwechseln mit einer isotropen Verteilung der Fasern in der Matrix.

Bevorzugt weist das Granulat (bzw. die einzelnen Körner des Granulats) einen Durchmesser von 20 µm bis 1000 µm auf. Auch der durchschnittliche Durchmesser des Granulats liegt dementsprechend in diesem Bereich. Wie oben beschrieben kann der Durchmesser z.B. durch die Parameter während einer Herstellung der Granulate mit einem Sprühverfahren eingestellt werden. Die Granulatgrößenverteilung kann z.B. mittels eines Laserbeugung, Lichtmikroskop und Bildanalyse oder mittels Lichtstreuung gemessen werden. Bei einem Durchmesser unter 20 µm tendieren die Granulate dazu, zu agglomerieren. Es kann dann zur Klumpenbildung kommen, wodurch die Granulate nur noch schwer einzusetzen sind. Bei einem Durchmesser über 1000 µm kann die Auflösung der Granulate zu niedrig sein, um kleine Formteile herzustellen. Daher wird ein Durchmesser von 20 µm bis 1000 µm, bevorzugt von 20 µm bis 500 µm, stärker bevorzugt von 50 µm bis 500 µm, noch stärker bevorzugt von 50 µm bis 200 µm bevorzugt.

Bevorzugt weisen die Fasern eine Länge von 50 µm bis 1000 µm oder 100 µm bis 1000 µm auf. Bevorzugt sind insbesondere Kurzfasern mit einer Länge von 0,1 mm bis 1 mm. Die Länge der Fasern sollte den Durchmesser des Granulats nicht unterschreiten. Daher wird für die die Länge der Fasern bevorzugt eine Länge von 20 µm bis 1000 µm, bevorzugt von 20 µm bis 500 µm, stärker bevorzugt von 50 µm bis 500 µm, noch stärker bevorzugt von 50 µm bis 200 µm ausgewählt.

Bevorzugt beträgt der Faseranteil im Granulat 1 % bis 50 %, stärker bevorzugt 5 % bis 50 %, noch stärker bevorzugt 10 % bis 50 %, noch stärker bevorzugt 20 % bis 50 % und am stärksten bevorzugt 30 % bis 40 %, bezogen auf das Volumen des Granulats. Der Faseranteil im Granulat wird entsprechend den gewünschten Eigenschaften, wie z.B. der Härte des Faserverbundwerkstoffs eingestellt.

Das Granulat kann des Weiteren ein Additiv aufweisen. Solche Additive sind z.B. Ruß, SiC, Si, oder Graphit. Mit der Zumischung der Additive können mechanische und thermische Materialeigenschaften gezielt eingestellt werden.

Bevorzugt wird in Schritt (ii) der Vorkörper additiv gefertigt. Bevorzugte additive Fertigungsverfahren sind Pulverbettverfahren, Freiraumverfahren, Flüssigmaterialverfahren und andere Schichtbauverfahren. Besonders hervorzuhebende Pulverbettverfahren sind selektives Laserschmelzen (SLM), selektives Lasersintern (SLS), Selective Heat Sintering (SHS), Binder Jetting und Elektronenstrahlschmelzen (Electron Beam Melting = EBM).

Der Vorkörper in Schritt (ii) wird bevorzugt mittels eines Pulverbettverfahrens durchgeführt. Insbesondere bevorzugt sind selektives Lasersintern (SLS) oder selektives Laserschmelzen (SLM). Bei einem solchen Verfahren wird ein physikalischer Härtungs/Schmelzprozess durchgeführt.

Selektives Lasersintern ist ein additives Schichtbauverfahren: der Vorkörper wird Schicht für Schicht aufgebaut. Durch die Wirkung der Laserstrahlen können so beliebige dreidimensionale Geometrien erzeugt werden. Das Verfahren kann als Rapid-Manufacturing- bzw. Rapid Tooling-Verfahren zur schnellen Erzeugung von Vorkörpern genutzt werden. Als Laser kann ein CO₂-Laser, ein Nd:YAG-Laser oder ein Faserlaser zum Einsatz kommen. Als pulverförmiger Werkstoff wird vorliegend das Granulat eingesetzt. Das Pulver kann auf einer Oberfläche vollflächig z.B. in einer Dicke von 10 bis 200 µm aufgebracht werden. Die Schichten werden durch eine Ansteuerung des Laserstrahles entsprechend der Schichtkontur des Bauteils schrittweise in das Pulverbett gesintert oder eingeschmolzen. Die Oberfläche wird nun um die gewünschte Schichtdicke abgesenkt und es wird eine neue Schicht aufgezogen. Das Pulver wird durch Anheben einer Pulverplattform oder als Vorrat in der Rakel zur Verfügung gestellt. Die Bearbeitung erfolgt Schicht für Schicht in vertikaler Richtung, wodurch es möglich ist, auch hinterschnittene Konturen zu erzeugen. Die Energie, die vom Laser zugeführt wird, wird vom Granulat absorbiert und führt zu einem lokal begrenzten Sintern von Granulat-Partikeln unter Reduktion der Gesamtoberfläche. Die Granulate werden bevorzugt als Kügelchen bereitgestellt, da im Prozess sehr hohe Anforderungen an die Beschaffenheit, wie z. B. die Rieselfähigkeit, des verwendeten Materials gestellt werden.

Beim selektiven Laserschmelzen wird das zu verarbeitende Granulat in einer dünnen Schicht auf einer Oberfläche aufgebracht. Das Granulat kann mittels Laserstrahlung lokal vollständig umgeschmolzen werden und nach der Erstarrung eine feste Materialschicht bilden. Anschließend wird die Oberfläche um den Betrag einer Schichtdicke abgesenkt und erneut Granulat aufgetragen. Dieser Zyklus wird solange wiederholt, bis alle Schichten umgeschmolzen sind. Für den Aufbau des Vorkörpers können Schichtstärken zwischen 10 µm und 500 µm eingesetzt werden. Um die Kontaminierung des Vorkörpers mit Sauerstoff zu vermeiden, kann der Prozess unter Schutzgasatmosphäre mit Argon oder Stickstoff stattfinden. Durch selektives Laserschmelzen gefertigte Bauteile zeichnen sich durch große Bauteildichten (> 99 %) aus. Dies gewährleistet, dass die mechanischen Eigenschaften des generativ hergestellten Bauteils weitgehend denen des Grundwerkstoffs entsprechen.

Gegenüber konventionellen Verfahren (z.B. Gussverfahren) zeichnet sich das Laserschmelzen dadurch aus, dass Werkzeuge oder Formen entfallen können (formlose Fertigung) und dadurch die Produkteinführungszeit reduziert werden kann. Ein weiterer Vorteil ist die große Geometriefreiheit, die Bauteilformen ermöglicht, die mit formgebundenen Verfahren nicht oder nur mit großem Aufwand herstellbar sind. Des Weiteren können Lagerkosten reduziert werden, da spezifische Bauteile nicht bevorratet werden müssen, sondern bei Bedarf generativ hergestellt werden.

Die oben genannten Verfahren sind dem Fachmann bekannt und werden hierin nicht weiter ausgeführt. Geräte, die für ein solches Verfahren eingesetzt werden können, werden z.B. von der Firma EOS bereitgestellt.

Bevorzugt wird in Schritt (iii) die Pyrolyse mittels eines Lasers durchgeführt. Dadurch können einzelne Bereiche des Vorkörpers angesteuert werden, so dass nur an diesen Stellen Gase entstehen, die aus dem Material entweichen. Gegenüber einem Verfahren, in dem ein Rohblock als Halbzeug pyrolysiert wird, hat dies den Vorteil, dass weniger hohe Drücke im Material entstehen und es nicht zu Rissen im Material kommt. Ganz besonders bevorzugt wird die Pyrolyse mit dem gleichen Gerät durchgeführt, welches für das selektive Lasersintern oder selektive Laserschmelzen in Schritt (ii) verwendet wird. Die Temperaturen während der Pyrolyse liegen beispielsweise bei 900 bis 1000°C, wobei in inerter Atmosphäre, also z.B. unter Stickstoff oder Argon pyrolysiert wird. Ein Vorteil eines Lasers ist, dass kurze Impulse an das Material angewandt werden können, wodurch es nur zur lokalen und temporären Erhitzung kommt.

Nach der Pyrolyse kann der poröse Vorkörper einen mittleren Porendurchmesser von 10 µm bis 1000 µm aufweisen. Stärker bevorzugt liegt der mittlere Porendurchmesser bei 10 µm bis 800 µm, noch stärker bevorzugt bei 20 µm bis 600 µm, noch stärker bevorzugt bei 50 µm bis 400 µm und am stärksten bevorzugt bei 100 µm bis 200 µm.

Die Pyrolyse in Schritt (iii) kann nach der Herstellung des Vorkörpers in Schritt (ii) durchgeführt werden, bevorzugt ist jedoch, dass die Pyrolyse von Schritt (iii) in-situ mit dem Herstellen des Vorkörpers von Schritt (ii) durchgeführt wird. Dadurch wird zum einen ein Verfahrensschritt eingespart, zum anderen kann gleichzeitig der Vorkörper hergestellt und pyrolysiert werden, so dass es nur zur lokalen Aufwärmung kommt und entstehende Gase einfach entweichen können.

Das Verfahren besteht dann im Wesentlichen aus nur zwei Schritten: der additiven Fertigung und in-situ Pyrolyse des Vorkörpers aus einem Granulat, und der Infiltration des porösen Vorkörpers mit dem Matrixmaterial. Das Verfahren kann durch die in situ Pyrolyse während des additiven Fertigungsverfahrens, beispielsweise mit SLS (selektives Lasersintern) oder SLM (selektives Laserschmelzen), einen weiteren Wärmebehandlungsprozesses einsparen und so die CO₂-Bilanz weiter verbessern, sowie Fertigungszeiten verkürzen und die Wirtschaftlichkeit erhöhen.

Das obige Verfahren hat den weiteren Vorteil, dass eine geringe Heizrate während dem Aufheizvorgang bei der Pyrolyse verwendet werden muss. Insbesondere bei großen Rohblöcken müsste das Material langsam aufgeheizt werden, um zu gewährleisten, dass nicht das komplette Polymer auf einmal pyrolisiert. In einem solchen Fall würde so viel Gas entstehen, dass der Druck im Material ansteigt, was zum Bruch des Materials führen kann. Wird hingegen das kombinierte additive Fertigungsverfahren mit der in-situ Pyrolyse eingesetzt, wird keine niedrige Aufheizrate benötigt, was zu einer kürzeren Verfahrensdauer und verbesserten Wirtschaftlichkeit des Verfahrens führen kann.

Bevorzugt wird in Schritt (iv) eine reaktive Infiltration des porösen Vorkörpers mit Silizium oder einem Metall, bevorzugt ausgewählt aus Aluminium, Titan, Magnesium, Kupfer oder Legierungen dieser Metalle, durchgeführt. Die Infiltration kann als spontane drucklose Infiltration durchgeführt werden, z.B. in dem der poröse Vorkörper in flüssiges Silizium oder flüssiges Metall getränkt wird. Bevorzugte Infiltrationsmethoden sind Auflage-, Docht- und Tauchtränkung. Die Infiltration kann unter oxydischer Atmosphäre, inerter Atmosphäre, oder unter Vakuum (unter geringem Druck, wie z.B. ca. 10-100 mbar) durchgeführt werden. Bevorzugt findet die Infiltration in inerter Atmosphäre, wie z.B. in einer Stickstoff- oder Argon-Atmosphäre statt. Alternativ kann mit Gasen gearbeitet werden, wobei ein Trägergas zum Einsatz kommt, welches das zu infiltrierende Material in die Poren trägt. Eine Infiltration mit flüssigem Silizium oder flüssigem Metall ist bevorzugt. Insbesondere bevorzugt ist die reaktive Infiltration des porösen Vorkörpers mit flüssigem Silizium.

Um eine Benetzbarkeit oder eine Verbesserung dieser zwischen porösem Vorkörper und dem infiltrierenden, flüssigen Halbmetall/Metall zu erreichen, können Flussmittel verwendet werden. Diese können zugleich als Oxidationsschutz der Schmelze dienen, welche zur Infiltration des Vorkörpers angedacht ist. Solche Flussmittel sind Additive, insbesondere Salze des zu infiltrierenden Materials, die eine benetzbare Schicht bei der Infiltration erzeugen.

Bevorzugt liegen die Fasern im Granulat von Schritt (i), im Vorkörper aus Schritt (ii), im porösen Vorkörper aus Schritt (iii) und/oder im infiltrierten porösen Vorkörper aus Schritt (iv) isotrop verteilt vor. Wie bereits oben beschrieben, liegen die Fasern im Faserverbundwerkstoff bevorzugt isotrop verteilt vor, was dessen Eigenschaften, wie insbesondere Wärmeleitfähigkeit, Festigkeit und Steifigkeit, unterstützt. Dazu können die Fasern bereits im Granulat von Schritt (i) isotrop verteilt vorliegen. Alternativ oder zusätzlich können die Granulate so verteilt werden, dass der daraus gebildete Vorkörper in Schritt (ii) isotrop verteilte Fasern aufweist. Die isotrope Verteilung der Fasern kann in den während der Pyrolyse von Schritt (iii) gebildeten porösen Vorkörper übertragen werden. Schlussendlich kann die isotrope Verteilung der Fasern während der Infiltration in Schritt (iv) in den Faserverbundwerkstoff übertragen werden.

Bevorzugt sind die Fasern mit einem Beschichtungsmaterial beschichtet. Dies kann zum Schutz während der Infiltration, vor Umwelteinflüssen oder zum Erreichen einer bestimmten Faser-Matrix-Anbindung dienen. Eine Beschichtung der Fasern während der Compound-Herstellung bzw. während des Granulierens ist ebenfalls möglich. Durch die Faserbeschichtung können die Faser-Matrix-Wechselwirkungen optimiert werden. Bedingt durch die Faserstruktur zeigen die Oberflächen von Kohlenstofffasern ein weitestgehend chemisch inertes Verhaltes auf. Außerdem weisen sie niedrige Oberflächenenergien auf. Durch die Oberflächenbehandlung kann die Haftung zwischen Faser und umgebender Matrix optimiert werden. Auch kann ein frühzeitiges Brechen der Verbunde durch z.B. Sprödbruch aufgrund der Beschichtung verhindert werden. Auch dient eine Beschichtung zum Schutz vor chemischem Angriff. Eine Beschichtung von Fasern kann auch den Vorteil mit sich führen, dass die isotropen Eigenschaften erhöht werden, was die Verbundfestigkeit weiter erhöht. Bevorzugt werden die Fasern mit pyrolytischem Kohlenstoff, mit Bornitrid, mit Titannitrid, mit Titancarbid oder mit Siliziumcarbid beschichtet.

Bevorzugt ist der durch das oben beschrieben Verfahren hergestellte Faserverbundwerkstoff ein keramischer Faserverbundwerkstoff oder ein metallischer Faserverbundwerkstoff. Wie bereits oben beschrieben, sind keramische Faserverbundwerkstoff solche, die eine keramische Matrix aufweisen. Bevorzugt sind C/SiC und SiC/SiC Faserverbundwerkstoffe. Metallische Faserverbundwerkstoffe sind solche, die eine metallische Matrix, bzw. eine Metallcarbid-Matrix aufweisen.

In einer bevorzugten Ausführungsform umfasst das Verfahren zum Herstellen eines Faserverbundwerkstoffs:
(i) Bereitstellen eines Granulats, das Polymer und Fasern umfasst,
(ii) Herstellen eines Vorkörpers aus dem Granulat und in-situ Pyrolysieren des Vorkörpers zu einem porösen Vorkörper, und
(iii) Infiltrieren des porösen Vorkörpers mit einem Matrix- oder Matrix-bildenden Material.

In einer weiteren bevorzugten Ausführungsform umfasst das Verfahren zum Herstellen eines Faserverbundwerkstoffs:
(i) Bereitstellen eines Granulats, das Duroplast und Kohlenstofffasern oder Siliziumcarbidfasern umfasst,
(ii) Herstellen eines Vorkörpers aus dem Granulat mittels eines additiven Fertigungsverfahrens und in-situ Pyrolysieren des Vorkörpers zu einem porösen Vorkörper, und
(iii) Infiltrieren des porösen Vorkörpers mit Silizium oder einem Metall, ausgewählt aus Aluminium, Titan, Magnesium, Kupfer oder Legierungen dieser Metalle.

Ein Faserverbundwerkstoff umfasst eine Metall- oder Keramik-Matrix, wobei Fasern von der Matrix eingebettet sind, wobei die Fasern isotrop im Werkstoff verteilt sind. Aufgrund der isotropen Verteilung der Fasern weist der Werkstoff isotrope Materialeigenschaften auf. Es wird angemerkt, dass die offene Porosität während des oben beschriebenen Herstellungsverfahrens zur Infiltration mit dem Matrixmaterial benötigt wird. Der fertige Faserverbundwerkstoff mit der Metall- oder Keramikmatrix kann nach der Infiltration im Wesentlichen oder gänzlich porenfrei sein. Diese kann zu einer weiteren Steigerung der Festigkeit und der Gasdichtheit führen.

Bedingt durch die Pyrolyse der Polymer-Matrix zur Kohlenstoffmatrix können auch Kohlenstoffpartikel vorliegen, die durch Carbidbildung z.B. im Falle mit der Infiltration von Silizium zu SiC-Partikeln umgesetzt werden. Dies führt zur sogenannten Hybridverstärkung, d.h. eine Kombination aus Partikel- und Faserverstärkung. Daher könnten neben den Fasern auch Partikel, wie insbesondere Kohlenstoffpartikel, in dem Wertstoff verteilt vorliegen. Da Partikel- und Faserverstärkung unterschiedliche Verstärkungsmechanismen aufweisen, können sich diese gegenseitig ergänzen und somit eine weitere Festigkeitssteigerung erzielt werden

Eine bevorzugte Keramik-Matrix umfasst Siliziumcarbid. Eine bevorzugte Metall-Matrix umfasst Aluminium oder Titan. Die Fasern sind bevorzugt ausgewählt aus Kohlenstoff- oder Siliziumcarbid-Fasern. Daher umfasst der Faserverbundwerkstoff insbesondere bevorzugt eine SiC-Matrix und Kohlenstofffasern, d.h. es handelt sich um einen C/SiC Faserverbundwerkstoff.

Der Faserverbundwerkstoff kann des Weiteren eine Porosität aufweisen. Der Faserverbundwerkstoff weist bevorzugt einen mittleren Porendurchmesser von 10 µm bis 1000 µm auf. Stärker bevorzugt liegt der mittlere Porendurchmesser bei 10 µm bis 800 µm, noch stärker bevorzugt bei 20 µm bis 600 µm, noch stärker bevorzugt bei 50 µm bis 400 µm und am stärksten bevorzugt bei 100 µm bis 200 µm.

Bevorzugt weisen die Fasern eine Länge von 50 µm bis 1000 µm oder 100 µm bis 1000 µm auf. Bevorzugt sind insbesondere Kurzfasern mit einer Länge von 0,1 mm bis 1 mm. Eine Länge von 20 µm bis 1000 µm, bevorzugt von 20 µm bis 500 µm, stärker bevorzugt von 50 µm bis 500 µm, noch stärker bevorzugt von 50 µm bis 200 µm, am stärksten bevorzugt von 100 µm bis 200 µm wird bevorzugt.

Bevorzugt beträgt der Faseranteil im Faserverbundwerkstoff 1 % bis 50 %, stärker bevorzugt 5 % bis 50 %, noch stärker bevorzugt 10 % bis 50 %, noch stärker bevorzugt 20 % bis 50 % und am stärksten bevorzugt 30 % bis 40 %, bezogen auf das Gewicht des Faserverbundwerkstoffs. Der Faseranteil im Faserverbundwerkstoff ist entsprechend den gewünschten Eigenschaften, wie z.B. der Härte des Faserverbundwerkstoffs, eingestellt.

Ein Faserverbundwerkstoff kann mit einem oben beschriebenen Verfahren hergestellt werden.

Bei der Fertigung eines Rohblocks mit einem Presswerkzeug entstehen große Blöcke, welche nach der Pyrolyse formgebend bearbeitet werden müssen. Speziell für Leichtbauanwendungen, wo dünnwandige Strukturen benötigt werden, kann dies bedeuten, dass bis zu 90% des Materials abgetragen werden müssen. Auch ist oftmals eine Verstärkung mit Langfasern nicht sinnvoll möglich und eine Verstärkung mit Kurzfasern effizienter, wie z.B. bei Bauteilen mit Beschlägen.

Die vorliegende Erfindung stellt ein Verfahren bereit, in dem Granulate eingesetzt werden, wodurch der Vorkörper additiv, bspw. mit selektivem Lasersintern oder selektivem Laserschmelzen, gefertigt werden kann. Durch den Einsatz der Granulate können die Vorkörper direkt in die gewünschte Form gebracht werden, ohne dass ein aufwendiges Formgebungsverfahren eines großen Rohblocks, z.B. durch Fräsen oder Sägen, benötigt wird. Da kein Material abgetragen werden muss und das überschüssige Granulat wiederverwendet werden kann, kommt es auch zu hohen Materialeinsparungen.

Bei der Fertigung eines Rohblocks mit einem Presswerkzeug werden die Fasern i. d. R. räumlich zueinander angeordnet. Die Faserausrichtung kann nur durch aufwendiges, isostatisches Pressen vermindert werden.

Die vorliegende Erfindung stellt ein Verfahren bereit, in dem Granulate eingesetzt werden. Jedes der Granulate weist eine eigene Faserverteilung auf, wodurch der daraus gebildete Vorkörper homogen verteilte, bzw. isotrop verteilte Fasern aufweist. Durch die isotrope Verteilung der Fasern weist der Faserverbundwerkstoff isotrope Materialeigenschaften auf.

Das Verfahren und der Faserverbundwerkstoff können des Weiteren dadurch verbessert werden, dass als Polymer im Granulat ein Duroplast verwendet wird, die Fasern isotrop vorliegen und die Fasern beschichtet sind.

Die Faserverbundwerkstoffe weisen isotrope thermische, mechanische, tribologische und elektrische Eigenschaften auf. Diese Eigenschaften können durch Additive einfach und gezielt weiter eingestellt werden. Im Gegensatz zu Faserverbundwerkstoffen mit anisotropen Eigenschaften können Bauteile aus diesem Werkstoff Lastkollektive mit unterschiedlichsten Lastrichtungen einfacher ausgelegt und gefertigt werden.

Weitere Vorteile der Erfindung sind Materialeinsparung, geringerer Energieverbrauch, höhere Materialqualität (Isotropie, Homogenität, Reproduzierbarkeit), Verringerung der Bauteilmasse durch effektivere Geometrien, Individuell angepasste Materialeigenschaften durch Variation der Pulveranteile, Fertigung von sehr komplexen Bauteilstrukturen, beliebige Freiformflächen, Hinterschneidungen, Hohlstrukturen, Herstellung von Bauteilen aus gradiertem Werkstoff mittels 3D-Druck auf Grundstrukturen.

### Beispiel für ein Herstellungs-Verfahren

In einem Beispiel wird ein Phenolharz mit 20% Kohlenstofffasern vermengt. Über ein Sprühverfahren wird das Granulat mit einem durchschnittlichen Durchmesser von ca. 50-100 µm erhalten. Das Granulat wird über selektives Laserschmelzen mit einem Gerät von EOS zu einem Vorkörper mit der gewünschten Form gewandelt. Gleichzeitig wird in-situ der Vorkörper während dem selektiven Laserschmelzen bei ca. 900-1000°C in einer Stickstoff-Atmosphäre pyrolysiert. Schlussendlich wird der so gebildete poröse Vorkörper in flüssiges Silizium eingetaucht, um den porösen Vorkörper reaktiv zu infiltrieren. Es entsteht ein poröser C/SiC Faserverbundwerkstoff, in dem die Kohlenstofffasern isotrop verteilt sind.

### Literatur

[1] Moon J, Caballero AC, Hozer L, Chiang Y-M, Cima MJ. Fabrication of functionally graded reaction infiltrated SiC-Si composite by three-dimensional printing (3DPTM) process. Materials Science and Engineering: A. 2001;298(1-2):110-9.
[2] Rambo CR, Travitzky N, Zimmermann K, Greil P. Synthesis of TiC/Ti-Cu composites by pressureless reactive infiltration of TiCu alloy into carbon preforms fabricated by 3D-printing. Materials Letters. 2005;59(8-9):1028-31.
[3] Shahzad K, Deckers J, Boury S, Neirinck B, Kruth J-P, Vleugels J. Preparation and indirect selective laser sintering of alumina/PA microspheres. Ceramics International. 2012;38(2):1241-7.
[4] Weber S, Sommer F, Kern F, Gadow R, Voggenreiter H, Koch D. Thermoplastic Forming as an Alternative Shaping Process for Near-Net-Shape Production of C-SiSiC Ceramics via Liquid Silicon Infiltration (LSI) Process. Journal of Ceramic Science and Technology. 2014;5(3):223-36.

## Patentansprüche

1. Verfahren zum Herstellen eines Faserverbundwerkstoffs, umfassend:
(i) Bereitstellen eines Granulats, das Polymer und Fasern umfasst,
(ii) Herstellen eines Vorkörpers aus dem Granulat,
(iii) Pyrolysieren des Vorkörpers zu einem porösen Vorkörper, und
(iv) Infiltrieren des porösen Vorkörpers mit einem Matrix- oder Matrix-bildenden Material.

2. Verfahren nach Anspruch 1, wobei in Schritt (i) das Polymer ein Duroplast umfasst und die Fasern Kohlenstoff-Fasern oder Siliziumcarbid-Fasern umfassen.

3. Verfahren nach einem der vorhergehenden Ansprüche, wobei in Schritt (i) das Granulat einen Durchmesser von 20 µm bis 1000 µm aufweist, die Fasern eine Länge von 20 µm bis 1000 µm aufweisen und der Faseranteil im Granulat 1 bis 50 %, bezogen auf das Gewicht des Granulats, beträgt.

4. Verfahren nach einem der vorhergehenden Ansprüche, wobei in Schritt (ii) der Vorkörper additiv gefertigt wird.

5. Verfahren nach einem der vorhergehenden Ansprüche, wobei in Schritt (ii) der Vorkörper mittels eines Pulverbettverfahrens, bevorzugt ausgewählt aus selektivem Lasersintern oder selektivem Laserschmelzen, durchgeführt wird.

6. Verfahren nach einem der vorhergehenden Ansprüche, wobei in Schritt (iii) die Pyrolyse mittels eines Lasers durchgeführt wird.

7. Verfahren nach einem der vorhergehenden Ansprüche, wobei die Pyrolyse von Schritt (iii) in-situ mit dem Herstellen des Vorkörpers von Schritt (ii) durchgeführt wird.

8. Verfahren nach einem der vorhergehenden Ansprüche, wobei in Schritt (iv) eine reaktive Infiltration des porösen Vorkörpers mit einem Halbmetall, bevorzugt ausgewählt aus Silizium, oder einem Metall, bevorzugt ausgewählt aus Aluminium, Titan, Magnesium, Kupfer oder Legierungen dieser Metalle, durchgeführt wird.

9. Verfahren nach einem der vorhergehenden Ansprüche, wobei die Fasern im Granulat von Schritt (i), im Vorkörper aus Schritt (ii), im porösen Vorkörper aus Schritt (iii) und/oder im infiltrierten porösen Vorkörper aus Schritt (iv) isotrop verteilt sind.

10. Verfahren nach einem der vorhergehenden Ansprüche, wobei die Fasern mit einem Beschichtungsmaterial, bevorzugt ausgewählt aus pyrolytischem Kohlenstoff, Bornitrid, Titannitrid, Titancarbid oder Siliziumcarbid beschichtet sind.

11. Verfahren nach einem der vorhergehenden Ansprüche, wobei der Faserverbundwerkstoff ein keramischer Faserverbundwerkstoff oder ein metallischer Faserverbundwerkstoff ist.

12. Faserverbundwerkstoff, der gemäß einem der Ansprüche 1 bis 11 hergestellt ist.

13. Faserverbundwerkstoff nach Anspruch 12, umfassend
- eine Metall- oder Keramik-Matrix,
- von der Matrix eingebettete Fasern,
wobei die Fasern isotrop im Werkstoff verteilt sind.

14. Faserverbundwerkstoff nach einem der Ansprüche 12 bis 13, wobei die Matrix eine Siliziumcarbid-, Titancarbid-, oder Aluminiumcarbid-Matrix umfasst.

15. Faserverbundwerkstoff nach einem der Ansprüche 12 bis 14, wobei die Fasern eine Länge von 20 µm bis 1000 µm aufweisen und der Faseranteil im Faserverbundwerkstoff 1 bis 50 % beträgt, bezogen auf das Gewicht des Faserverbundwerkstoffs.
